# EUROPEAN PATENT APPLICATION

(11) **EP 2 017 702 A1**
(43) Date of publication of application: **21.01.2009**
(21) Application number: 07112437.4
(22) Date of filing: 13.07.2007
(51) Int. Cl.: G06F 3/038

(54) **Method for controlling the movement of a cursor**

(71) Applicant: Flinglab AB, 41115 Göteborg (SE)
(72) Inventor: Jarland, Mats, 411 15, Göteborg (SE); Falkman, Fredrik, 411 38, Göteborg (SE)
(74) Representative: Lind, Urban Arvid Oskar

(57) **Abstract**

The present invention relates to a method for controlling movement of a cursor shown on a display screen using a pointing device controlled by a user, comprising the steps of detecting movement parameters for the cursor using the pointing device, and adjusting the position of the cursor in accordance with the detected movement parameters, wherein the method further comprises the steps of detecting a user action indicative of a desired future movement trajectory for the cursor, estimating the desired future movement trajectory based on detected movement parameters at the time of, and/or possibly before, user action and a predetermined model of a movement trajectory, and adjusting the position of the cursor in accordance with the future movement trajectory. The present invention provides for the possibility to "disconnect" the actual control of the cursor from the directional user input provided by the user when controlling the pointing device. When detecting a specific indicative user action, the cursor can be "sent away" from its initial position in accordance with an estimated desired future movement trajectory, which e.g. can be based on the speed and direction detected at the time of the user action.

The present invention also relates to a corresponding control system, and a similar computer program product.

## Description

### Field of the invention

The present invention relates to a method for controlling the movement of a cursor on a display screen. The present invention also relates to a corresponding control system for controlling the movement of a cursor on a display screen, and a similar computer product.

### Description of the related art

Computer pointing devices, such as computer mouses (or mice), are among the most popular devices for interfacing with a computer and for controlling the movement of a cursor on a display screen connected to the computer. Generally, the position of the cursor on the display screen is directly controlled by the user by moving the mouse in two dimensions on a flat surface. Movements of the mouse correspond to the two dimensional motion of the cursor on the screen.

Computer mouse sensitivity is generally measured in terms of counts per inch (CPI), i.e. the number of steps the mouse will report when it moves one inch. Earlier, the movement of the cursor on the display screen directly corresponded to the movement of the computer mouse, however, the "one-to-one connection" between the actual movement of the pointing device and the movement of the cursor on the display screen is in many cases undesirable as an extensive movement of the users hand/arm/finger is necessary. Therefore, different algorithms have been developed for controlling the movement of the cursor on the display screen.

An algorithm for controlling the movement of the cursor on the display screen can for example be adapted to make the cursor move faster or slower than the corresponding movement of the computer mouse, i.e. the measured CPI. A control algorithm can further be adapted to change the speed of the cursor dynamically. Furthermore, an alternative control algorithm can count the number of "counts" received from the computer mouse, and then move the cursor a number of pixels multiplied by a factor, or for example by accelerating the movement of the cursor in relation to the corresponding movement of the computer mouse.

In WO 98/21645 an improved control method is disclosed to facilitate the movement of a pointer on a computer screen. The method tries to predict a cursor movement by adjusting the cursor path such that possible screen targets that are possibly intended to be selected can be selected in a quicker manner. However, the user controlling the computer mouse still have to extensively move his/her hand/arm/finger (which controls the computer mouse) to adjust the cursor to approach the screen target, thus leading to ergonomic disadvantages for the user.

### Object of the invention

There is therefore a need for a novel control method for controlling the movement of a cursor on a computer screen, and more specifically that handles the prior art problems with ergonomic disadvantages due to extensive movement of the users hand/arm/finger when controlling a cursor using a computer mouse.

### Summary of the invention

According to an aspect of the invention, the above object is met by a method for controlling the movement of a cursor shown on a display screen using a pointing device controlled by a user, comprising the steps of detecting movement parameters for the cursor using the pointing device, and adjusting the position of the cursor in accordance with the detected movement parameters, wherein the method further comprises the steps of detecting a user action indicative of a desired future movement trajectory for the cursor, estimating the desired future movement trajectory based on detected movement parameters at the time of, and/or possibly before, user action and a predetermined model of a movement trajectory, and adjusting the position of the cursor in accordance with the future movement trajectory.

The present invention provides for the possibility to "disconnect" the actual control of the cursor from the directional input provided by the user when controlling the pointing device. When detecting a specific indicative user action, the cursor can be "sent away" from its initial position in accordance with an estimated desired future movement trajectory, which e.g. can be based on the speed and direction detected at the time of, and/or possibly before, the user action.

Accordingly, if detecting a movement in a first direction at a first speed, and thereafter detecting the user action that is indicative of the desired future movement trajectory, the estimated future movement trajectory will be used to adjust the cursor position such that the cursor travels, independently of a user directional input, a certain distance away from the position where the user action was detected, e.g. as an extension to the directional movement of the cursor detected before the indicative user action. The future movement trajectory can for example provide an independent adjustment possibility for the cursor that from a time and speed perspective looks like the sliding path a heavy granite stone takes down the ice towards the target area in for example curling. However, from a perspective when the cursor position is adjusted, this will be represented as an extension of the movement in the first direction at the first speed and direction as detected at the time of the user action, and thereafter a slow deceleration (as from a friction perspective) such that the cursor slows down before "stopping" at its new end position.

This is for example advantageous when working with a pointing device, such as for example a touch pad or similar, thereby allowing for the user to send/push away the cursor without actually having to repeatedly move his/her finger over the touch pad to for example be able to move the cursor from one corner of the display screen to another diagonally opposite corner of the display screen. The method according to the present invention is however also advantageous when using a regular computer mouse or similar.

Also, by disconnecting the direct connection between the directional user input and the actual movement of the cursor on the display screen it is possible to provide ergonomic advantages, in comparison to prior art, as the control method according to the present invention limits the amount of hand/arm/finger movement that has to be provided by the user for adjusting the position of the cursor on the computer screen, thus providing extended efficiency and less strain for the user of the pointing device. It should be noted that the movement of the cursor on the computer screen functions conventionally whenever the indicative user action has not been provided, i.e. when the control method according to the present invention is not executed.

Preferably, the indicative user action is achieved by detecting a distinct interruption of movement of the pointing device. For example, when the pointing device is a touch pad, this distinct interruption can be accomplished by for example removing the "control finger" from the touch pad "on the go", i.e. removing the control finger from the touch pad during continuous directional movement over the touch pad without stopping. In this case, the stream of directional control parameters provided as a user input will be interrupted, which in this case can be detected and used for representing the indicative user action.

However, it is also possible to achieve the indicative user action by detecting a movement in a direction different then the general movement plane for the pointing device. This is especially advantageous when using a "normal" computer mouse as the pointing device. For example, if the normal computer mouse is adapted to detect movement in a x- and y-direction (that coincide with the plane on which the computer mouse is moved), the computer mouse can be extended to include a sensor for detecting a movement in a z-direction. The detection of the movement in the z-direction can be simplified to only provide a "digital" output, i.e. if the computer mouse is moved in the z-direction or not. Thus, if it is detected that the computer mouse is moved in the z-direction, this is used for representing the indicative user action. However, when lifting (with speed) a normal computer mouse during movement (not comprising a z-direction detection sensor), this can be detected as an interruption of the stream of directional movement data, and used for representing the indicative user action. In a case when using an optical mouse, this will be due to the fact that the optical sensor comprised with the optical mouse loses focus, or similar, of the surface on which the optical mouse normally is moved over.

It is possible, and within the scope of the present invention, to use other means for detecting the user action. For example, it is possible to include an extra button/key on the pointing device for allowing the user to provide the indicative user action, or simply assigning a button/key on a keyboard connected to a computer further connected to the computer screen and the pointing device.

In a preferred embodiment of the present invention, the predetermined model of the movement trajectory is based on a calculation model. That is, the detected movement parameters at, and/or possibly before, the time of user action are provided to the calculation model, which based on these input values will provide a movement trajectory that will be used for adjusting the position of the cursor on the computer screen. It can also be possible to include other predetermined parameters when calculating the future movement trajectory, for example including a general desired minimum, and/or maximum, distance that the cursor should be "relocated" when the indicative user action is detected.

In another preferred embodiment of the present invention, the predetermined model of the movement trajectory is a look-up table. This can be advantageous when implementing the method in a real time hardware implementation, having a desired focus on minimizing the computational power used by the control method according to the present invention. In this case the look-up table can be programmed during manufacturing of the pointing device, and possibly updated by the user through the computer connected to the pointing device. It should be noted that the future movement trajectory can have a different forms and shape, i.e. re-positioning of the cursor does not necessary need to be made according to the shortest line between the start and the end position of the future movement trajectory. For example, the future movement trajectory can be adjusted to take different forms and shapes, and also include transformation of the cursor icon.

Preferably, the movement parameters comprises at least one of speed, direction, velocity, and acceleration. These parameters are generally detected by means of the pointing device during the use of the pointing device. However, it can also be possible to include other parameters, for example based on historical, i.e. earlier, movement parameters detected when using the pointing device. Also, movement parameters detected during the step of adjusting the cursor according future movement trajectory can be used for "real-time" influence of the future movement trajectory.

According to a further aspect of the invention, there is provided a control system adapted for controlling the movement of a cursor shown on a display screen using a pointing device controlled by a user, the control system comprising means for detecting movement parameters for the cursor using the pointing device, and means for adjusting the position of the cursor in accordance with the detected movement parameters, wherein the control system further comprises means for detecting a user action indicative of a desired future movement trajectory for the cursor, means for estimating the desired future movement trajectory based on detected movement parameters at the time of, and/or possibly before, user action and a predetermined model of a movement trajectory, and means for adjusting the position of the cursor in accordance with the future movement trajectory.

As described above in relation to the method according to the present invention, this novel control system provides a plurality of advantages over prior art due to the fact that it is not necessary for the user of the pointing device to move his/her hand/arm/finger as extensively as when using a pointing device controlled by a prior art control method/system. Preferably, the control system is integrated with the computer connected to the pointing device and the display screen.

The control system according to the present invention can for example, but not exclusively, be fully or at least partly implemented in a control circuitry. In a preferred embodiment, the means for detecting movement parameters, means for detecting a user action, and means for estimating the desired future movement trajectory are implemented in a control circuitry for controlling the pointing device. This control circuitry can also be implemented as a firmware for a pointing device for controlling the pointing device.

According to a still further aspect of the present invention there is provided a computer program product, such as a device driver, comprising a computer readable medium having stored thereon computer program means for causing a computer to provide control of a cursor on a display screen, wherein the computer program product comprises code for detecting movement parameters for the cursor using the pointing device, and code for adjusting the position of the cursor in accordance with the detected movement parameters, wherein the computer program product further comprises code for detecting a user action indicative of a desired future movement trajectory for the cursor, code for estimating the desired future movement trajectory based on detected movement parameters at the time of, and/or possibly before, user action and a predetermined model of a movement trajectory, and code for adjusting the position of the cursor in accordance with the future movement trajectory.

The computer is preferably the computer connected to the pointing device and the display screen, and the computer readable medium is one of a removable non-volatile random access memory, a hard disk drive, a floppy disk, a CD-ROM, a DVD-ROM, or a similar computer readable medium known in the art. As such, the computer program product can be executed on the computer such that the cursor is controlled in accordance with the present invention.

### Brief description of the drawings

These and other aspects of the present invention will now be described in more detail, with reference to the appended drawings showing currently preferred embodiments of the invention, in which:
Figure 1 is a block diagram of a computer system including a pointing device comprising a control system according to an embodiment of the present invention;
Figure 2 illustrates the use of a pointing device and a diagram of a stream of detected user data used for detecting an indicative user action; and
Figure 3 illustrates movement paths for a cursor over a computer screen, according to prior art and according to embodiments of the present invention.

### Detailed description of currently preferred embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

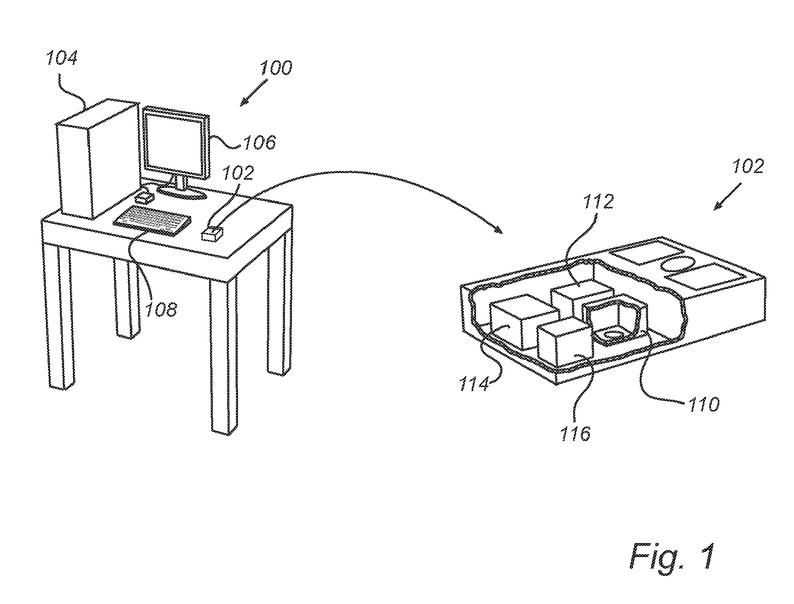

Referring now to the drawings and to figure 1 in particular, there is depicted a block diagram of a computer system 100 including a pointing device 102 comprising a control system according to an embodiment of the present invention.

The computer system 100 further comprises, in addition to the pointing device 102, a computer 104 such as a PC, a display device 106 in the form of a computer screen connected to the computer 104, and a keyboard 108. The pointing device 102 and the keyboard 108 are both wirelessly connected to the computer 104 by means of a RF- or infrared communication interface. In the present embodiment the computer 104 comprises a wireless communication module. It is however possible to use a wired connection between the pointing device 102 and the computer 104.

In figure 1, there is also depicted a detailed view of the pointing device 102. The pointing device 102 is preferably an optical mouse, even though it is possible to use a ball controlled mouse or a similar device. With the pointing device 102 there is included a control system according to the present invention, based on a hardware, or firmware, implementation of the control method according to the present invention. In the present embodiment, the pointing device 102 comprises an optical sensor 110, a wireless communication module 112 for transmitting movement parameters and control signals to the computer 104, and optionally an inertia sensor 114 for detecting movement in a direction (i.e. a z-direction) different than the plane (i.e. x- and y-direction) over which the pointing device 102 normally is moved. The pointing device 102 furthermore comprises conventional control buttons and a scroll wheel as is normal in the case of an optical or ball controlled mouse.

The pointing device 102 also comprises a control circuit 116 which constitute the base for the control system according to the present invention. The control circuit 116 is also adapted for receiving data/signals from the optical sensor 110 and the inertia sensor 114, and for providing data/signals to the wireless communication module 112 for transmission to the computer 104. The control circuit 116 may include a microprocessor, a microcontroller, a programmable digital signal processor or another similar programmable device. The control circuit 116 may also, or instead, include an application specific integrated circuit (ASIC), a field programmable gate array (FPGA), a programmable logic device, or a digital signal processor. Where the control circuit 116 includes a programmable device such as the microprocessor or microcontroller mentioned above, the processor may further include computer executable code that controls the operation of the programmable device.

During operation of the pointing device 102, e.g. movement of the pointing device 102 in an x-y-direction over a plane, the optical sensor 110 captures images that are provided to the control circuit 116, where they are computed and provided as movement parameters. The computation between captured images and movement parameters are generally performed according to a method known in the art.

The movement parameters generally comprise speed, direction, velocity, and acceleration of the pointing device 102 over the plane. In a conventional pointing device, these parameters are directly transferred to the computer 104 where they are used for controlling the movement of a cursor displayed on the computer screen 106. However, in accordance with the present embodiment of the invention, the movement parameters are also used for detection of a user action that indicates if the user controlling the pointing device 102 has a desire to execute the control method according to the present invention, as will be further discussed below.

In an exemplary embodiment of the present invention, the detection of a user action is performed by sampling the movement parameters computed by the control circuit 116. In this case, the detection is performed in two steps, the first step comprising detecting a continuous stream of movement parameters, and thereafter in step two a detection of a rapid change, e.g. absence, in the stream of movement parameters. The rapid change in the stream of movement parameters can for example be achieved when the user controlling the pointing device 102 lifts the pointing device 102 from the x-y-plane "on the go" as is discussed above, such that the optical sensor loses focus, or similar, of the plane over which the pointing device 102 is generally moved.

This detection can further be enhanced using the inertia sensor 114. When using the inertia sensor 114 for the detection of a user action for activating the control method according to the present invention, a control signal provided by the inertia sensor 114 can be used for masking the movement parameters provided by means of the optical sensor 110. Accordingly, as soon as the user action is detected using the inertia sensor 114, the control method according to the present invention is performed without using any potential movement parameters provided by means of the optical sensor 110.

It would however of course be possible, and within the scope of the present invention, to adapt the control method such that possible movement parameters provided after the detection of the user action are included when performing the control method according to the present invention, which will be further discussed below.

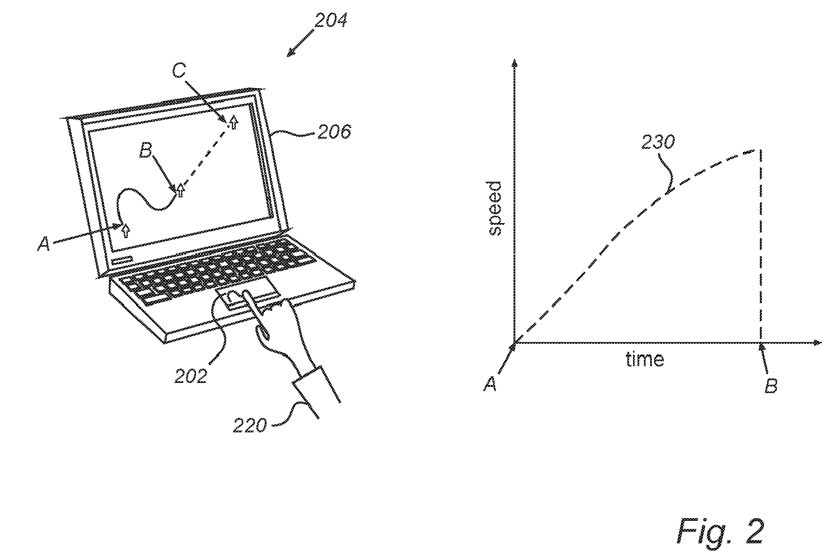

Turning now to figure 2, which illustrates an alternative embodiment of the present invention. Conversely to figure 1, which illustrated the possibility to implement the control method according to the present invention as a hardware component within a pointing device, figure 2 illustrates a different embodiment where the control method instead is implemented using software. The software can be implemented as a device driver for the pointing device, but it is however also of course possible to implement the control method as a separate, or integrated, hardware module.

In figure 2, a computer 204, in the form of a laptop, comprises an integrated computer screen 206, and an integrated pointing device 202. The pointing device 202 is in the present embodiment implemented as a touch pad or similar. When a user 220 moves his/her finger over the touch pad 202, the cursor will be arranged to move over the computer screen 206. Conventionally, there is a direct connection between the movement of the finger over the touch pad 202, possibly including a speed and acceleration algorithm for speeding up the movement of the cursor over the computer display 206. However, by means of the present invention, it is possible to further enhance the movement of the cursor over the computer screen by detecting a user action indicative of a desired future movement trajectory, after which the "control connection" between the pointing device and the movement of the cursor on the computer screen 206 is broken, such that the cursor will start to move over the computer screen 206 without an additional input from the user 220, i.e. instead of in the normal case where the cursor stops at the same time as the user stops to move/interact with the pointing device.

The two different positions, A and B, indicate the start and the end of the movement of the users finger over the touch pad 202, respectively. The diagram in figure 2 illustrates the corresponding speed vs. time curve 230 when the user moves his/her finger over the touch pad 202. At position A, the movement is started, staring from a zero speed up to a maximum speed at position B. However, at position B, the user has a desire to use the control method according to the present invention for moving the cursor a further distance extending from the position where the user action was detected, i.e. position B.

The detection is in this case performed as discussed above, i.e. the rapid change in the stream of movement parameters is used to detect the indicative user action. When not using an inertia sensor as in figure 1, it might be necessary to filter the movement parameters such that only large changesin the stream of movement parameters are detected. Preferably, a change in the stream of movement parameters that is larger than a predefined value is interpreted as a user action. The predefined value can possibly be adjustable, for example using a software control interface for controlling parameters relating to the control method according to the present invention.

As mentioned above, when the user action indicative of a desired future movement trajectory for the cursor is detected, in this case at position B, the cursor will be adapted to move, independently of any user input. In the present embodiment, historical movement parameters providing a movement direction of the cursor over the computer screen 206, are used for determining the direction of the future movement trajectory according to which the cursor will be moved over the computer screen 206 after the detection of the user action. The historical movement parameters are generally based on a predetermined number of samples at, and/or before, the time of the indicative user action. It is also possible to adjust the future movement trajectory such that the cursor moves a predetermined distance at a predetermined speed.

However, it is also possible to adjust the future movement trajectory such that the movement trajectory is not only based on the movement direction of the cursor before the detection of the user action, but also on the speed with which the cursor was moved before the detected user action. The speed before the indicative user action will in this case be used for determining how far and at what speed the cursor should start to move, possibly including "bouncing" on the boarder of the computer screen 206. The future movement trajectory might however also be adapted such that the cursor slows down and stops a predetermined distance from the boarder of the computer screen 206. The option to use the historical speed of the cursor before the detection of the user action, as well as the bouncing effect can possibly be controlled using the above discussed user interface for controlling parameters relating to the control method according to the present invention.

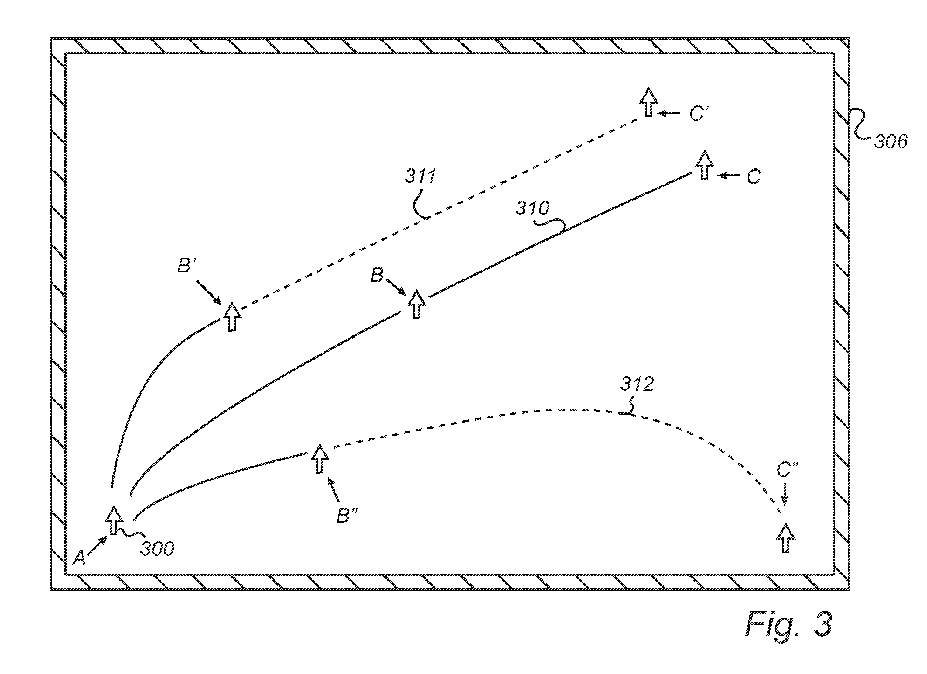

Moving on to figure 3, which illustrates a computer screen 306, similar to the computer screen 106 in figure 1 and computer screen 206 in figure 2. On the computer screen 306, there is depicted three different movement paths 310, 311 and 312 of a cursor 300 controlled by a pointing device, such as for example the optical mouse 102 in figure 1, or the touch pad 202 in figure 2.

Starting with the first movement path 310, illustrating the conventional control of a cursor 300 for moving the cursor 300 over the computer screen 306. The starting point for the cursor 300 is at position A on the computer screen 306. When the user moves/interacts with the pointing device, movement parameters are detected and used for controlling the movement of the cursor 300. As long as movement parameters are provided, the cursor 300 is moved, eventually stopping at intermediate position B on the computer screen 306, when it for example is impossible to further move the computer mouse due to e.g. a cluttered desk, or when "running out" of touch pad to move the finger on. The user then has to start over again, e.g. by lifting the computer mouse onto an open area of the desk, for thereafter again moving the computer mouse, such that the cursor eventually reaches the end position C. As mentioned above, this is the conventional method used for controlling the cursor 300 on a computer screen 306.

Turning now to movement path 311 which illustrates the movement path when controlling the cursor 300 using the control method according to the present invention. The cursor 300 has the same starting position, A, as in relation to the first movement path 310. However, when reaching the intermediate position B', a user action is detected. This user action is detected using any of the detection methods discussed above, or can also/instead be achieved by detecting the activation of a specifically assigned button on the keyboard, a button arranged together with the touch pad, or an extra button comprised with the optical mouse.

At the intermediate position B', again, historical directional and speed values are used for determining the future movement trajectory for the movement of the cursor 300 on the computer screen 306. The movement path 311 is extended based on the movement path of the cursor 300 directly before the detection of the user action, such that the cursor 300 is moved to the final stop position C'. However, it can also be possible to interrupt the future movement trajectory by again placing a finger on the touch pad 202 (if the touch pad is adapted to detect the presence of the finger on the touch pad), or giving new input on the pointing device.

It is also possible, and within the scope of the present invention, to provide user input that can be used for possibly changing the direction of the future movement trajectory, even after the detection of the user action. Such a case is illustrated by the movement path 312, which as well as movement path 310 and 311 has it starting point at position A. Similar to movement path 311, a user action is detected at the intermediate position B", after which the movement path is extended (according to the future movement trajectory) as discussed in relation to movement path 311. However, movement path 312 is somewhat different, as it in this case is possible to provide user input during the movement according to the future movement trajectory. This can be achieved by for example holding down a specifically assigned button (possibly the above discussed activation button) and thereafter move/interact with the pointing device. This alternative embodiment can possibly be advantageous when using an extensively large computer screen 306. Furthermore, it is understood that the actual speed vs. time diagram movements is different when for example lifting the control finger "on the go", as discussed above, or when decelerating the finger during normal movement. This difference is usable for detecting the indicative user action.

The skilled addressee realizes that the present invention by no means is limited to the preferred embodiments described above. On the contrary, many modifications and variations are possible within the scope of the appended claims. For example, it is possible to not only use the output from the inertia sensor for masking the movement parameters provided by means of the above discussed optical sensor. Instead, the output of the inertia sensor can be used for providing the above discussed user input provided after the user action for adjusting the future movement trajectory, e.g. for providing movement parameters not only in a z-direction, but also in an x-y-direction.

In conclusion, it is according to the present invention provided a new method for controlling the movement of a cursor on a computer screen. The present invention makes it possible to achieve better precision when moving the cursor shorter distances over the computer screen, as there is no need for, or possibly at least less use of, the prior art acceleration and speed algorithms presently used for improving the movement of the cursor over the computer screen. Furthermore, the present invention also provides higher efficiency when moving the cursor longer distances over the computer screen.

## Claims

1. A method for controlling movement of a cursor shown on a display screen using a pointing device controlled by a user, comprising the steps of:
- detecting movement parameters for the cursor using the pointing device; and
- adjusting the position of the cursor in accordance with the detected movement parameters;
**characterized in that** the method further comprises the steps of:
- detecting a user action indicative of a desired future movement trajectory for the cursor;
- estimating the desired future movement trajectory based on detected movement parameters at the time of, and/or possibly before, user action and a predetermined model of a movement trajectory; and
- adjusting the position of the cursor in accordance with the future movement trajectory.

2. Method according to claim 1, wherein the indicative user action is achieved by detecting a distinct interruption of movement of the pointing device.

3. Method according to claim 1, wherein the indicative user action is achieved by detecting a movement in a direction different then the general movement plane for the pointing device.

4. Method according to any one of the preceding claims, wherein the predetermined model of the movement trajectory is based on a calculation model.

5. Method according to any of claims 1 - 3, wherein the predetermined model of the movement trajectory is a look-up table.

6. Method according to any one of the preceding claims, wherein the movement parameters comprises at least one of speed, direction, velocity, and acceleration.

7. A control system adapted for controlling the movement of a cursor shown on a display screen using a pointing device controlled by a user, the computer system comprising:
- means for detecting movement parameters for the cursor using the pointing device; and
- means for adjusting the position of the cursor in accordance with the detected movement parameters;
**characterized in that** the control system further comprises:
- means for detecting a user action indicative of a desired future movement trajectory for the cursor;
- means for estimating the desired future movement trajectory based on detected movement parameters at the time of, and/or possibly before, user action and a predetermined model of a movement trajectory; and
- means for adjusting the position of the cursor in accordance with the future movement trajectory.

8. Control system according to claim 7, wherein the indicative user action is achieved by detecting a distinct interruption of movement of the pointing device.

9. Control system according to claim 7, wherein the indicative user action is achieved by detecting a movement in a direction different then the general movement plane for the pointing device.

10. Control system according to any of claims 7 - 9, wherein the means for detecting movement parameters, means for detecting a user action, and means for estimating the desired future movement trajectory are implemented in a control circuitry for controlling the pointing device. predetermined model of the movement trajectory is a calculation model.

11. Device driver including software instructions adapted to perform the control method according to any one of claims 1 - 6.

12. A computer program product comprising a computer readable medium having stored thereon computer program means for causing a computer to provide control of a cursor on a computer screen, wherein the computer program product comprises:
- code for detecting movement parameters for the cursor using the pointing device; and
- code for adjusting the position of the cursor in accordance with the detected movement parameters;
**characterized in that** the computer program product further comprises:
- code for detecting a user action indicative of a desired future movement trajectory for the cursor;
- code for estimating the desired future movement trajectory based on detected movement parameters at the time of user action and a predetermined model of a movement trajectory; and
- code for adjusting the position of the cursor in accordance with future movement trajectory.

13. A computer program product according to claim 12, wherein the computer readable medium is one of a removable non-volatile random access memory, a hard disk drive, a floppy disk, a CD-ROM, and a DVD-ROM.
